# EUROPEAN PATENT APPLICATION

(11) **EP 4 181 105 A1**
(43) Date of publication of application: **17.05.2023**
(21) Application number: 22206932.0
(22) Date of filing: 11.11.2022
(51) Int. Cl.: G08G 5/00, G06Q 10/047, G06Q 50/30

(54) **PAIRING AIRCRAFT FOR FORMATION FLIGHT**

(30) Priority: 12.11.2021 US 202117525566
(71) Applicant: The Boeing Company, Arlington, VA 22202 (US)
(72) Inventor: Altus, Stephen S., Campbell (CA); Morales, Frank R., Montreal (CA); Sipe, Alvin L., Kenmore, WA (US)
(74) Representative: Hoffmann Eitle

(57) **Abstract**

The present disclosure provides for identifying common flight path portions for aircraft and determining, from various factors and variables, an improved flight plan to take advantage of the reduced aerodynamic interference offered in the wake of aircraft. These improved flight plans provide improvements in fuel efficiency to the aircraft, which can extend the range of the aircraft for a given fuel capacity, require less fuel over a given route, and allow for faster travel between two points, among other improvements to the underlying aircraft.

## Description

### FIELD

Aspects of the present disclosure relate to aircraft control. More particularly, the present disclosure provides systems and methods for using aircraft routing to provide improved fuel efficiency for aircraft in formation flight.

### BACKGROUND

Aircraft in flight face significant forces such as headwinds and other aerodynamic forces which in turn raise the amount of energy and fuel needed to power the aircraft as it travels through the air during flight operations. In some cases, an aircraft following a lead aircraft may experience less aerodynamic interference while traveling within a wake of the lead aircraft (wake surfing). The lower aerodynamic interference in turn reduces the amount of energy required by the following aircraft and increases fuel efficiency.

While the advantages of wake surfing have been studied and documented, the large scale nature of civil and commercial flight operations has prevented aircraft operators, such as commercial airlines, from taking advantage of wake surfing to improve the energy usage and fuel efficiency of aircraft fleets.

### SUMMARY

The present disclosure provides a method in one aspect, the method including: identifying, from a first route for a first aircraft and a second route for a second aircraft, a common flight path portion; identifying at least one change to a base flight plan for the second aircraft to provide a rendezvous for the second aircraft to fly within a wake of the first aircraft over the common flight path portion; generating a plurality of updated flight plans with one or more of the at least one change to the base flight plan for the second aircraft; selecting, from the plurality of updated flight plans, an improved flight plan for improved fuel efficiency; replacing the base flight plan for the second aircraft with the improved flight plan. The method also includes implementing the improved flight plan at an improved fuel economy for the second aircraft relative to a base fuel economy for the base flight plan for the second aircraft. Other embodiments of this aspect include corresponding computer systems, apparatus, and computer programs recorded on one or more computer storage devices, each configured to perform the actions of the methods.

In one aspect, in combination with any example method above or below, the method where the common flight path portion may include a passive overlap of the first route with the second route at a first time; where identifying the at least one change to the base flight plan for the second aircraft may include at least determining one or more updated airspeeds for the second aircraft to position the second aircraft within the wake of the first aircraft; and where selecting the improved flight plan may include selecting a rendezvous airspeed and a formation airspeed for the second aircraft, where the rendezvous airspeed and the formation airspeed position the second aircraft in the wake of the first aircraft in the common flight path portion.

In one aspect, in combination with any example method above or below, the method where identifying the at least one change to the base flight plan for the second aircraft further may include determining one or more extended common flight paths to position the second aircraft within the wake of the first aircraft for an extended flight path portion; and where selecting the improved flight plan further may include selecting an extended common flight path from the one or more extended common flight paths.

In one aspect, in combination with any example method above or below, the method where identifying the common flight path portion further may include: identifying one or more additional aircraft with routes proximate to the second route, selecting the first aircraft from the one or more additional aircraft for the common flight path portion, where the common flight path portion may include a proactive overlap of the first route with the second route; and where identifying the at least one change to the base flight plan for the second aircraft further may include a determining a route change to at least the second route to position the second aircraft for the proactive overlap in the common flight path portion.

In one aspect, in combination with any example method above or below, the method where the at least one change to the base flight plan for the second aircraft may include an alteration to a departure time for the second aircraft.

In one aspect, in combination with any example method above or below, the method may include: identifying at least one change to a base flight plan for the first aircraft to provide the rendezvous for the second aircraft to fly within the wake of the first aircraft over the common flight path portion; replacing the base flight plan for the first aircraft with the improved flight plan; and implementing the improved flight plan at the first aircraft for the improved fuel economy for the second aircraft relative to the base fuel economy for the base flight plan for the second aircraft.

In one aspect, in combination with any example method above or below, the improved flight plan causes the second aircraft to fly within the wake of the first aircraft over the common flight path portion, thereby reducing a combined amount of fuel emissions from fuel consumption of the first aircraft and the second aircraft during flight operations.

The present disclosure provides a system in one aspect, the system including a processor; a memory storage device including instructions that when executed by the processor enable performance of an operation including: identifying, from a first route for a first aircraft and a second route for a second aircraft, a common flight path portion; identifying at least one change to a base flight plan for the second aircraft to provide a rendezvous for the second aircraft to fly within a wake of the first aircraft over the common flight path portion; generating a plurality of updated flight plans with one or more of the at least one change to the base flight plan for the second aircraft; selecting, from the plurality of updated flight plans, an improved flight plan for improved fuel efficiency; replacing the base flight plan for the second aircraft with the improved flight plan. The method also includes implementing the improved flight plan at an improved fuel economy for the second aircraft relative to a base fuel economy for the base flight plan for the second aircraft.

In one aspect, in combination with any example system above or below, the system where the common flight path portion may include a passive overlap of the first route with the second route at a first time; where identifying the at least one change to the base flight plan for the second aircraft may include at least determining one or more updated airspeeds for the second aircraft to position the second aircraft within the wake of the first aircraft; and where selecting the optimal flight plan may include selecting a rendezvous airspeed and a formation airspeed for the second aircraft, where the rendezvous airspeed and the formation airspeed position the second aircraft in the wake of the first aircraft in the common flight path portion.

In one aspect, in combination with any example system above or below, the operation where identifying the at least one change to the base flight plan for the second aircraft further may include determining one or more extended common flight paths to position the second aircraft within the wake of the first aircraft for an extended flight path portion; and where selecting the optimal flight plan further may include selecting an extended common flight path from the one or more extended common flight paths.

In one aspect, in combination with any example system above or below, the operation where Identifying the common flight path portion further may include: identifying one or more additional aircraft with routes proximate to the second route, selecting the first aircraft from the one or more additional aircraft for the common flight path portion, where the common flight path portion may include a proactive overlap of the first route with the second route; and where identifying the at least one change to the base flight plan for the second aircraft further may include a determining a route change to at least the second route to position the second aircraft for the proactive overlap in the common flight path portion.

In one aspect, in combination with any example system above or below, where the at least one change to the base flight plan for the second aircraft may include an alteration to a departure time for the second aircraft.

In one aspect, in combination with any example system above or below, where the operation may include: identifying at least one change to a base flight plan for the first aircraft to provide the rendezvous for the second aircraft to fly within the wake of the first aircraft over the common flight path portion; replacing the base flight plan for the first aircraft with the improved flight plan; and implementing the improved flight plan at the first aircraft for the improved fuel economy for the second aircraft relative to the base fuel economy for the base flight plan for the second aircraft.

In one aspect, in combination with any example system above or below, the improved flight plan causes the second aircraft to fly within the wake of the first aircraft over the common flight path portion, thereby reducing a combined amount of fuel emissions from fuel consumption of the first aircraft and the second aircraft during flight operations.

The present disclosure provides a computer program product in one aspect, the computer program product including a computer-readable storage medium having computer-readable program code embodied therewith, the computer-readable program code executable by one or more computer processors to perform an operation, including: identifying, from a first route for a first aircraft and a second route for a second aircraft, a common flight path portion; identifying at least one change to a base flight plan for the second aircraft to provide a rendezvous for the second aircraft to fly within a wake of the first aircraft over the common flight path portion; generating a plurality of updated flight plans with one or more of the at least one change to the base flight plan for the second aircraft; selecting, from the plurality of updated flight plans, an improved flight plan for improved fuel efficiency; replacing the base flight plan for the second aircraft with the improved flight plan. The method also includes implementing the improved flight plan at an improved fuel economy for the second aircraft relative to a base fuel economy for the base flight plan for the second aircraft.

In one aspect, in combination with any example computer program product above or below, where the common flight path portion may include a passive overlap of the first route with the second route at a first time; where identifying the at least one change to the base flight plan for the second aircraft may include at least determining one or more updated airspeeds for the second aircraft to position the second aircraft within the wake of the first aircraft; and where selecting the optimal flight plan may include selecting a rendezvous airspeed and a formation airspeed for the second aircraft, where the rendezvous airspeed and the formation airspeed position the second aircraft in the wake of the first aircraft in the common flight path portion.

In one aspect, in combination with any example computer program product above or below, where identifying the at least one change to the base flight plan for the second aircraft further may include determining one or more extended common flight paths to position the second aircraft within the wake of the first aircraft for an extended flight path portion; and where selecting the optimal flight plan further may include selecting an extended common flight path from the one or more extended common flight paths.

In one aspect, in combination with any example computer program product above or below, where identifying the common flight path portion further may include: identifying one or more additional aircraft with routes proximate to the second route, selecting the first aircraft from the one or more additional aircraft for the common flight path portion, where the common flight path portion may include a proactive overlap of the first route with the second route; and where identifying the at least one change to the base flight plan for the second aircraft further may include a determining a route change to at least the second route to position the second aircraft for the proactive overlap in the common flight path portion.

In one aspect, in combination with any example computer program product above or below, where the at least one change to the base flight plan for the second aircraft may include an alteration to a departure time for the second aircraft.

In one aspect, in combination with any example computer program product above or below, where the operation may include: identifying at least one change to a base flight plan for the first aircraft to provide the rendezvous for the second aircraft to fly within the wake of the first aircraft over the common flight path portion; replacing the base flight plan for the first aircraft with the improved flight plan; and implementing the improved flight plan at the first aircraft for the improved fuel economy for the second aircraft relative to the base fuel economy for the base flight plan for the second aircraft.

### BRIEF DESCRIPTION OF THE DRAWINGS

So that the manner in which the above recited features can be understood in detail, a more particular description, briefly summarized above, may be had by reference to example aspects, some of which are illustrated in the appended drawings.
Figure 1 depicts examples of an aircraft pair with favorable aerodynamic interference, according to aspects of the present disclosure.
Figure 2 depicts an example of aircraft pair coordination with passive overlapping routes, according to aspects of the present disclosure.
Figure 3 depicts an example of aircraft pair coordination with an extended common flight path, according to aspects of the present disclosure.
Figure 4 depicts an example of aircraft pair coordination with proactive overlapping routes, according to aspects of the present disclosure.
Figure 5 depicts an example of aircraft pair coordination with an alteration to a departure time, according to aspects of the present disclosure.
Figure 6 illustrates a data processing architecture, according to aspects of the present disclosure.
Figure 7 is a flowchart of a method for determining an improved flight plan for improved fuel efficiency, according to aspects of the present disclosure.
Figure 8 is a flowchart of a method for determining an overlap portion for improved fuel efficiency, according to aspects of the present disclosure.
Figure 9 illustrates a computing device, according to aspects of the present disclosure.

### DETAILED DESCRIPTION

The present disclosure relates to systems and methods for pairing aircraft for formation flight to allow a following or second aircraft to use the wake of a lead or first aircraft for reduced aerodynamic interference during portions of civil and commercial flights. An aircraft flying or otherwise traveling in the wake of another aircraft experiences less aerodynamic interference than it would otherwise encounter during flight operations.

Aircraft operators, such as commercial airlines, have large incentives to coordinate aircraft in order to reduce the aerodynamic interference experienced by at least some of its aircraft. For example, having aircraft travel in pairs for at least some portion of a flight will allow for a following aircraft to reduce its fuel usage and thus providing an advantage to the aircraft overall. However, the vast number of aircraft and flight operations, along with the variable and changing routes that the aircraft travel along make efficiently coordinating formations or aircraft pairs difficult.

The systems and methods described herein provide for identifying common flight path portions for aircraft, and determining from various factors and variables an improved flight plan to take advantage of the reduced aerodynamic interference offered in the wake of aircraft. These improved flight plans provide improvements in fuel efficiency to the aircraft, which can extend the range of the aircraft for a given fuel capacity, require less fuel over a given route, allow for faster travel between two points, among other improvements to the underlying aircraft.

The systems and methods described also provide for reducing an environmental impact, such as a combined amount of emissions from fuel consumption, of aircraft during flight operations. In some examples, the improved fuel efficiency of the aircraft pair offers improved environmental outcomes by reducing an amount of emissions from fuel consumption produced by the aircraft pair and flight operations overall. Moreover, in some examples, excessive numbers of wake/contrails produced by many aircraft have been shown to negatively affect the environment. The aircraft flying in aircraft pairs for at least some portion of flight operations reduces this environmental impact by also reducing the number of wake/contrails produced by the aircraft pair.

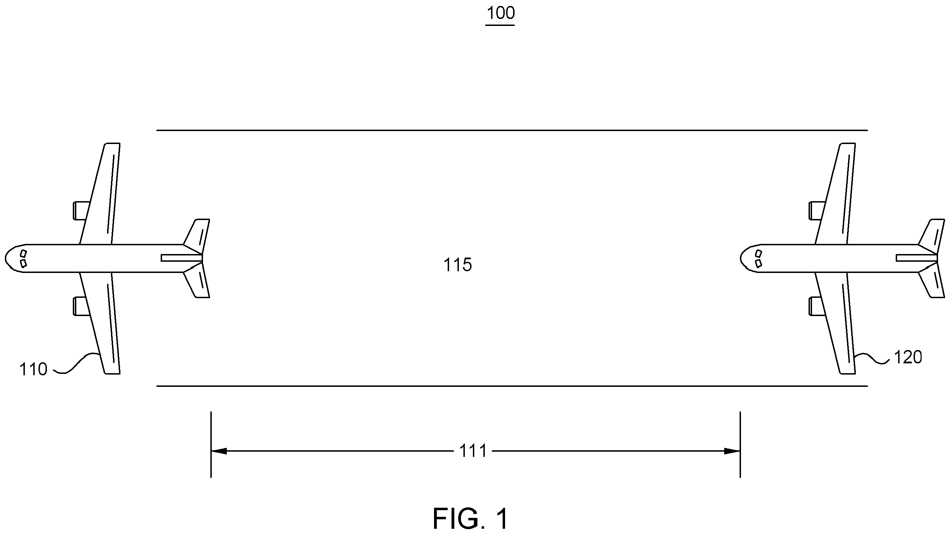

Figure 1 depicts examples of an aircraft pair 100 with favorable aerodynamic interference, according to aspects of the present disclosure. The aircraft pair 100 includes a first aircraft 110 and a second aircraft 120. As the first aircraft 110 travels or otherwise flies through air, the first aircraft 110 produces a wake 115 due to the lift of the first aircraft 110 and the vortices produces by the wings of the first aircraft 110. In some examples, the wake 115 produces favorable aerodynamic interference for any aircraft that may wake surf or follow the first aircraft 110 within a given distance. For example, a following aircraft, such as the second aircraft 120, may use the disturbed airflow in the wake 115 to reduce an amount of energy required for the second aircraft 120 to travel through the air. In some examples, the second aircraft 120 is positioned to travel at a distance 111 behind the first aircraft 110 and within the wake 115 to safely take advantage of the favorable aerodynamic interference. The distance 111 provides adequate spacing to avoid any physical or unsafe interaction between the first aircraft 110 and the second aircraft 120 while allowing the second aircraft 120 to reduce its energy and fuel usages within the favorable aerodynamic interference.

In some examples, the wake 115 may not provide a favorable aerodynamic interference. For example, various environmental conditions including temperature, ambient winds, precipitation, and other factors may render the wake 115 as less favorable for the second aircraft 120 to experience improved flying conditions. Additionally, a distance between the first aircraft 110 and the second aircraft 120 or a difference between the routes of the aircraft discussed below may prevent the wake 115 from providing favorable aerodynamic interference for the second aircraft.

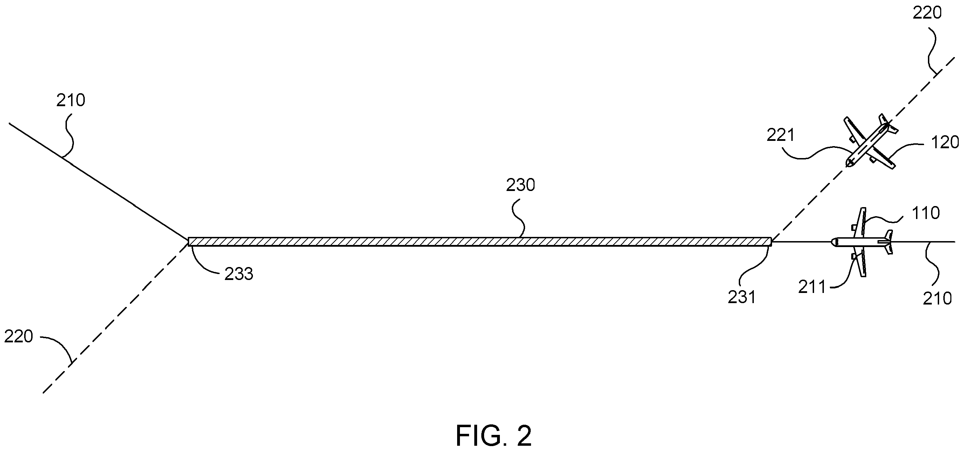

As discussed above, the challenge remains to coordinate the first aircraft 110 and the second aircraft 120 into the aircraft pair 100 while ensuring that the second aircraft 120 sees energy and fuel savings offered by wake surfing. In some examples, the first aircraft 110 and the second aircraft 120 may be operated by a same operator, such as a same airline. The first aircraft 110 and the second aircraft 120 may also be operated by different operators. For example, the first aircraft 110 may be operated by a first airline and the second aircraft 120 may be operated by a second airline. In both examples, a coordination of the travel paths of the aircraft pair 100 to include the first aircraft 110 and the second aircraft 120 in a formation to provide increased fuel efficiency requires route improvement and coordination as described in relation to Figures 2-9.

Figure 2 depicts an example of aircraft pair coordination with passive overlapping routes, according to aspects of the present disclosure. For example, a first route 210, for the first aircraft 110 and a second route 220, for the second aircraft 120 may include a common flight path portion. In some examples, first route 210 and the second route 220 are a preplanned or standard travel route for the respective aircraft as they travel to their respective destinations. For example, the first aircraft 110 is traveling along first route 210 to a destination and the second aircraft 120 is traveling along second route 220 to another destination. As shown in Figure 2, the common flight path portion for the first route 210 and the second route 220 includes a passive overlap 230 of the first route 210 and the second route 220. For example, although the first aircraft 110 and the second aircraft 120 may have separate destinations, the aircraft may travel along a common corridor or flight path during a portion of each respective flight.

In this example, the first aircraft 110 and the second aircraft 120 form the aircraft pair 100 during the during the passive overlap 230 in order to provide fuel saving advantages to the second aircraft 120 without altering the first route 210 or the second route 220. As described herein, a passive overlap includes portions of at least two routes such that the aircraft travel through the same airspace along a same path in the passive overlap, without alteration to the aircraft routes.

In order to form the aircraft pair 100, the first aircraft 110 and/or the second aircraft 120 may alter their airspeeds to travel at respective rendezvous airspeeds. In some examples, the rendezvous airspeeds position the respective aircraft into the aircraft pair 100 during the passive overlap 230. For example, at a first location 211 the first aircraft 110 may update its base flight plan to travel at rendezvous airspeed slower than its base flight plan airspeed until it reaches a rendezvous point 231, and the second aircraft 120, at the second location 221, may update its base flight plan to travel at a rendezvous airspeed faster than its base flight plan airspeed until it reaches the rendezvous point 231. The updated airspeeds position the first aircraft 110 and the second aircraft 120 for a rendezvous into the aircraft pair 100 at a rendezvous point 231, where the rendezvous point 231 is within the passive overlap 230.

In some examples, updates to the base flight plans may also include updates/changes to an altitude of the first aircraft and the second aircraft to position the aircraft into formation for the aircraft pair. In some examples, the change in altitude may also be used to determine when the aircraft pair provides overall fuel saving advantages.

In some examples, as the aircraft pair 100 travel through the passive overlap 230, the first aircraft 110 and second aircraft 120 update their base flight plans to travel at a formation airspeed in order to maintain the aircraft in the aircraft pair 100 while keeping the second aircraft 120 at the distance 111 behind the first aircraft 110. For example, the formation airspeed may be a same airspeed for both aircraft in the aircraft pair to ensure the aircraft pair travel together at the distance 111.

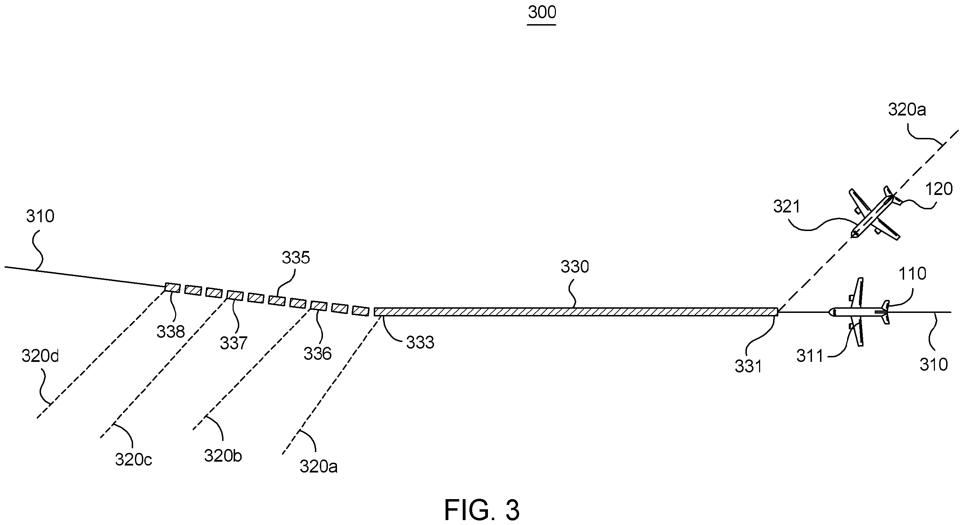

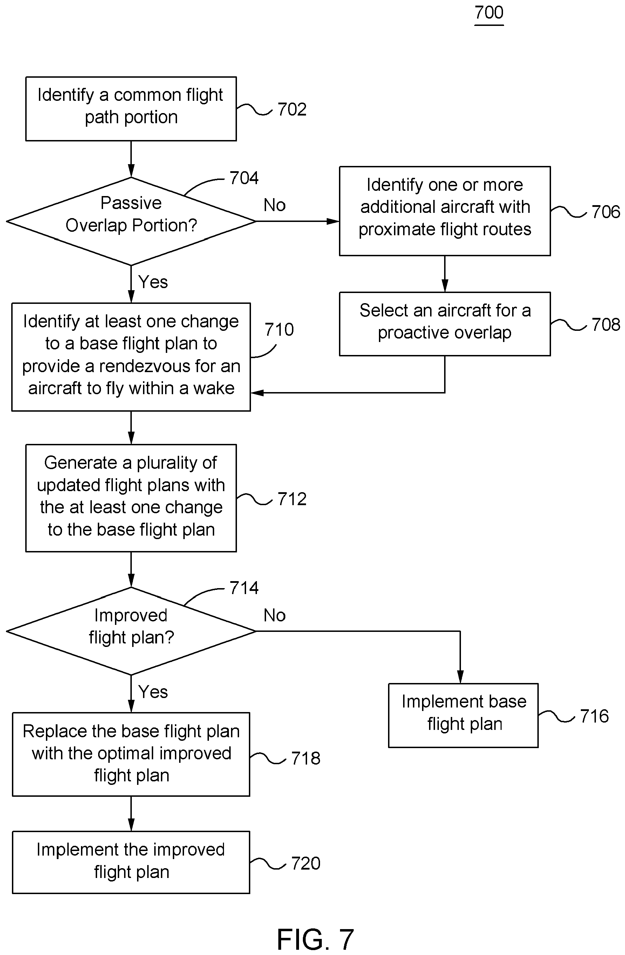

At a divergence point 233, the passive overlap 230 ends and the first aircraft 110 continues along the first route 210 and the second aircraft 120 continues along the second route 220 ending the aircraft pair 100. In some examples, the rendezvous point 231, and the divergence point 233, may be positioned at various points along the passive overlap 230, where the rendezvous point 231 and the divergence point 233 are determined and selected as part of an improved flight plan to provide fuel and energy savings as described in the operations in Figures 7-8. In some examples, the common flight path portion may include a passive portion, but the common flight path portion may also be lengthened in order to increase fuel and energy savings as shown in Figure 3.

Figure 3 depicts an example of aircraft pair coordination with an extended common flight path, according to aspects of the present disclosure. For example, a first route 310, for the first aircraft 110, and an initial second route 320a, for the second aircraft 120 may include a common flight path portion. In some examples, the first route 310, and the initial second route 320a, include a preplanned or standard travel route similar to the first route 210 and the second route 220 for the respective aircraft as they travel to a destination, as described in relation to Figure 2. As shown in Figure 3, the common flight path portion for the first route 210 and the second route 220 includes a passive overlap 330 of the first route 310 and the initial second route 320a.

In this example, the first aircraft 110 and the second aircraft 120 form the aircraft pair 100 during the passive overlap 330 in order to provide fuel saving advantages to the second aircraft 120. As described above, in order to form the aircraft pair 100, one or more of the first aircraft 110 and the second aircraft 120 may alter their airspeeds in order to position the aircraft into the aircraft pair 100 during the passive overlap 330. For example, at a first location 311 the first aircraft 110 may update its base flight plan to travel at a slower airspeed and the second aircraft 120 at the second location 321 may update its base flight plan to travel at a faster airspeed. The updated airspeeds position the first aircraft 110 and the second aircraft 120 to rendezvous into the aircraft pair 100 at a rendezvous point 331 within the passive overlap 330.

In some examples, as the aircraft pair 100 travel through the passive overlap 330, the first aircraft 110 and the second aircraft 120 update their base flight plans to travel at a formation airspeed in order to maintain the aircraft in the aircraft pair 100 and the second aircraft 120 at the distance 111 behind the first aircraft 110. Without an extended overlap portion, the second aircraft 120 would depart the aircraft pair 100 at the divergence point 333, and continue along the initial second route 320a.

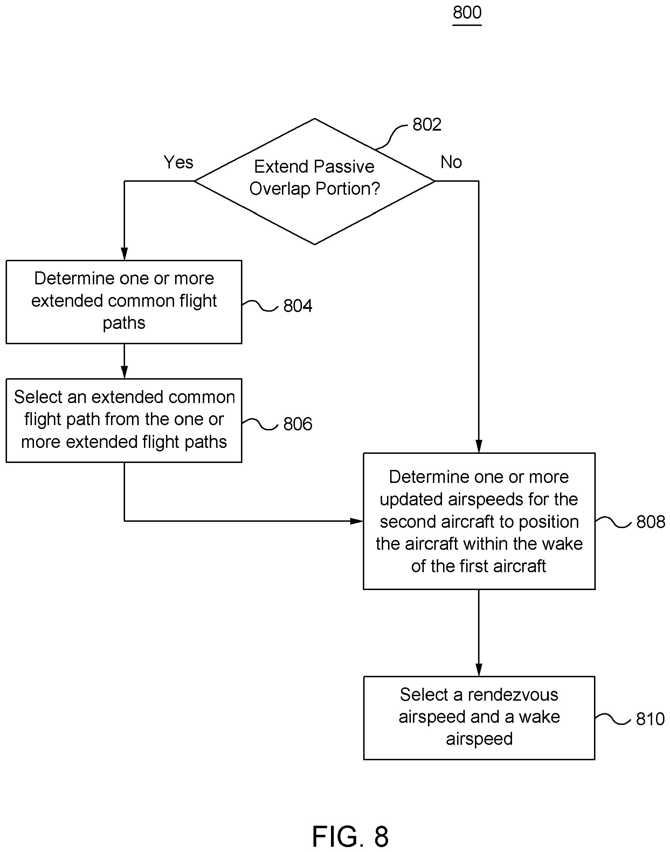

In some examples, additional extended common flight paths are determined as described in more detail in the methods described in Figure 8. For example, an extended portion 335 may be examined for fuel efficiency improvements for the aircraft pair 100. In some examples, the first aircraft 110 or the second aircraft 120 may also update a route in the base flight plan in order to extend the aircraft pairing into the portion 335. For purposes of illustration, the initial second route 320a for the second aircraft 120 is updated to follow the first aircraft 110 along the first route 310 for the portion 335. In some examples, the first aircraft 110 may alter also alter its route in order to extend the portion 335.

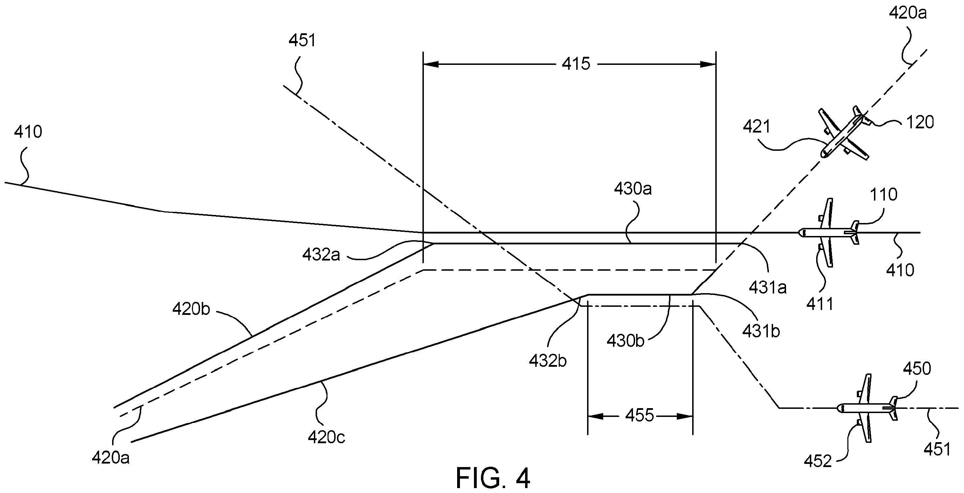

In order to provide fuel efficiency improvements and other benefits for the aircraft pair 100, the second aircraft 120 departs from the extend portion 335 at a divergence point selected to increase the fuel efficiency gains made in the wake 115 while also allowing the second aircraft 120 to continue along its route to the destination. For example, divergence point 336, divergence point 337, and divergence point 338, represent potential points where the extended common flight path, portion 335, ends and the second aircraft 120 continues along an updated respective route to the destination. For example, at divergence point 336, the second aircraft 120 travels along a first updated second route 320b to the destination, at divergence point 337 and divergence point 338, the second aircraft 120 travels along the second updated second routes 320c and a third updated second route 320d respectively. In some examples, the rendezvous point 331 and a divergence point selected from the divergence points 333, 336, 337, and 338, are positioned and selected as part of an improved flight plan to provide fuel and energy savings, as described in the operations in Figure 8. In some examples, the common flight path portion may not include a passive overlap portion, but routes for the aircraft may be proximate to or relatively close to each other such that the routes may be proactively altered to increase fuel and energy savings as shown in Figure 4.

Figure 4 depicts an example of aircraft pair coordination with proactive overlapping routes, according to aspects of the present disclosure. In this example, several example overlapping routes may be examined for proactive changes to base flight plans. The base flight plans for a plurality of aircraft and routes may be examined by the system 610 described herein to provide for improved fuel efficiency for the aircraft pairs, among other benefits. For example, the plurality of aircraft include the first aircraft 110, the second aircraft 120, and the third aircraft 450. A first route 410, for the first aircraft 110, and an initial second route 420a, for the second aircraft 120, may include proximate portions 415 of the routes where the initial second route 420a and the first route 410, do not overlap, but where base plan routes may be proactively altered to provide a proactive overlap.

In some examples, the first route 410 and the initial second route 420a intersect at the intersection point as the respective aircraft travel to a destination. While the initial second route 420a does not passively overlap the first route 410, the routes are proximate or similar for the proximate portion 415. In order to pair the first aircraft 110 and the second aircraft 120 into the aircraft pair 100, the initial second route 420a is altered into the first proactively altered route 420b including a proactive overlap 430a, where the second aircraft 120 travels along the first route 410 in the wake of the first aircraft 110. While shown as second aircraft 120 altering its initial second route 420a in Figure 4 for ease of description, the first route 410 may also be altered to match the initial second route 420a for the proactive overlap 430a, or both the initial second route 420a and the first route 410 may be altered to provide the proactive overlap 430a.

Additionally, one or more of the first aircraft 110 and the second aircraft 120 may alter their airspeeds in order to position the aircraft into the aircraft pair 100 during the proactive overlap 430a. For example, at a first location, location 411, the first aircraft 110 may update its base flight plan to travel at a slower airspeed and the second aircraft 120 at first location 421, may update its base flight plan to travel at a faster airspeed. The updated airspeeds position the first aircraft 110 and the second aircraft 120 to rendezvous into the aircraft pair 100 at a rendezvous point 431a, within the proactive overlap 430a.

In some examples, as the aircraft pair 100 travel through the proactive overlap 430a, the first aircraft 110 and the second aircraft 120 update their base flight plans to travel at a formation airspeed in order to maintain the aircraft in the aircraft pair 100 and the second aircraft 120 at the distance 111 behind the first aircraft 110. At a divergence point 432a, the proactive overlap 430a ends and the first aircraft 110 continues along the first route 410 and the second aircraft 120 continues along the first proactively altered route 420b; ending the aircraft pair 100. In some examples, the rendezvous point 431a, and the divergence point 432a, may be positioned at various points along the proactive overlap 430a where the rendezvous point 431a and the divergence point 432a are determined and selected as part of an improved flight plan to provide fuel and energy savings, among other benefits.

In some examples, while the proactive overlap 430a may provide fuel and energy savings for the second aircraft 120 when traveling along the first proactively altered route 420b, other aircraft pair options may provide better fuel efficiency. For example, the initial second route 420a also intersects the third route 451 at an intersection point. While the initial second route 420a does not passively overlap the third route 451, the routes are proximate to each other or otherwise similar for the proximate portion 455. To provide an alternate pairing for the second aircraft 120, the initial second route 420a is altered into a second proactively altered route 420c including a proactive overlap 430b, where the second aircraft 120 travels along the third route 451 in the wake of the third aircraft 450. For ease of description, second aircraft 120 alters its initial second route 420a in Figure 4, the third route 451 may also be altered to match the initial second route 420a for the proactive overlap 430a, or both the initial second route 420a and the third route 451 may be altered to provide the proactive overlap 430b.

Additionally, one or more of the third aircraft 450 and the second aircraft 120 may alter their airspeeds in order to position the aircraft into the aircraft pair during the proactive overlap 430b. For example, at the first location 421, the second aircraft 120 may update its base flight plan to travel at a faster airspeed and the third aircraft 450 at a third location 452 may update its base flight plan to travel at a slower airspeed. The updated airspeeds position the third aircraft 450 and the second aircraft 120 to rendezvous into the aircraft pair 100 at a rendezvous point 431b within the proactive overlap 430b.

In some examples, as the aircraft pair including the third aircraft 450 and the second aircraft 120 travel through the proactive overlap 430b, the third aircraft 450 and the second aircraft 120 update their base flight plans to travel at a formation airspeed in order to maintain the aircraft in an aircraft pairing. At a divergence point 432b, the proactive overlap 430b ends and the third aircraft 450 continues along the third route 451 and the second aircraft 120 continues along the second proactively altered route 420c ending the aircraft pair 100. In some examples, the rendezvous point 431b and the divergence point 432b may be positioned at various points along the proactive overlap 430b where the rendezvous point 431b and the divergence point 432b are determined and selected as part of an improved flight plan to provide fuel and energy savings, among other benefits.

For the second aircraft 120 in Figure 4, the updated routes include varying fuel savings, where the methods and systems described herein determine which of the first proactively altered route 420b or second proactively altered route 420c, provides greater fuel savings to the second aircraft 120 and provides the best fuel savings as an improved flight plan as described herein in relation to Figures 7-8.

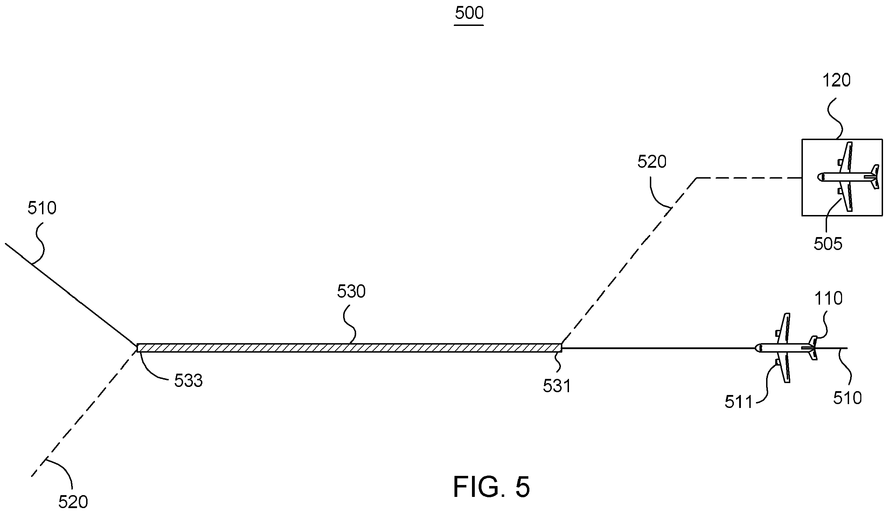

Furthermore, in the examples shown in Figures 2-4, the various route updates and changes occur as the aircraft, such as the first aircraft 110, the second aircraft 120, and the third aircraft 450, are underway along respective routes or are otherwise in flight. Providing aircraft pairing for aircraft in flight may provide dynamic and up-to-date pairings to provide improved flight paths as weather conditions affect the operations of the aircraft. However, in some examples, aircraft operators or other flight plan implementers may wish to determine and coordinate improved flight plans for fuel efficiency prior to the aircraft taking off as described in more detail in relation to Figure 5.

Figure 5 depicts an example of aircraft pair coordination 500 with an alteration to a departure time, according to aspects of the present disclosure. For example, a first route 510, for the first aircraft 110 and a second route 520, for the second aircraft 120 may include a common flight path portion 530. In some examples, the first route 510 and the second route include a preplanned or standard travel route for the respective aircraft as they travel to a destination. In some examples, the common flight path portion 530 for the first route 510 and the second route 520 may include a passive overlap, an extended common flight path, or a proactive overlap as described in relation to Figures 2-4.

In some examples, the first aircraft 110 is at a first location 511 along the first route 510 and the second aircraft 120 is at origin location 505. In order to form the aircraft pair 100, the first aircraft 110 may alter its airspeed in order to position the aircraft into the aircraft pair 100 during the common flight path portion 530. Additionally, the change to the base flight plan for the second aircraft 120 may include an alteration to a departure time from the origin location 505. For example, at a first location 511 the first aircraft 110 may update its base flight plan to travel at a slower airspeed and the second aircraft 120 at the origin location 505 may update its base flight plan to move up or delay take off in order to form the aircraft pair 100 during the common flight path portion. The updated departure time and airspeeds position the first aircraft 110 and the second aircraft 120 to rendezvous into the aircraft pair 100 at a rendezvous point 531 within the common flight path portion 530 where the aircraft pair continues along the respective routes at the divergence point 533.

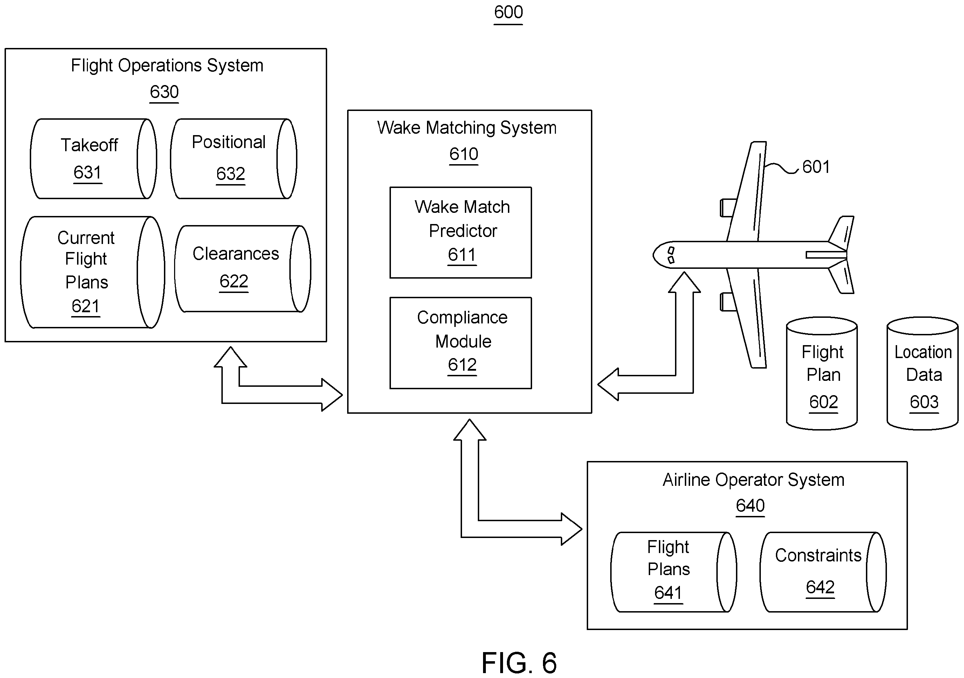

Figure 6 illustrates a data processing architecture 600, according to aspects of the present disclosure. To pair aircraft together and determine improved flight plans to increase fuel efficiency for the aircraft pair overall, a wake matching system, system 610, determines and manages various flight plans and routes available to the aircraft 601 and selects an improved flight plan for an aircraft pair, such as the aircraft pair 100 described above.

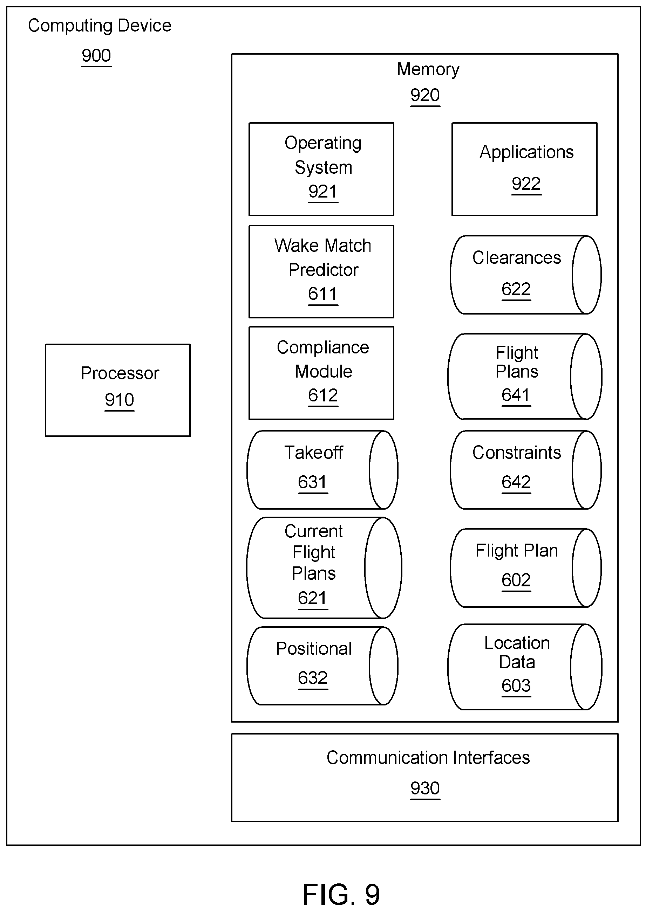

The system 610 is in communication with the various aircraft such as aircraft 601, including at least the first aircraft 110 and second aircraft 120 described in relation to Figures 1-5, a flight operations system 630, and an airline operator system 640 in this example. Each of the aircraft 601, wake matching system 610, flight operations system 630, and airline operator system 640 are representative of or include one or more computing devices, such as those described in relation to Figure 9, that process and store various data. In various embodiments, operations of the system 610 may be performed on dedicated hardware or as part of a cloud computing environment in various aspects. Although the aircraft 601, wake matching system 610, flight operations system 630, and airline operator system 640 are illustrated as single systems, in various aspects, the system 610 is in communications with several instances of each, and each instance may provide some or all of the associated data in different aspects.

For example, the aircraft 601 may provide the system 610 with various flight plan data, such as flight plan data 602 and location data 603 for the aircraft 601. The flight plan data 602 can at least indicate a base flight plan, including the currently planned routes for the aircraft 601, as well as predicted aircraft paths and times from various onboard aircraft systems. The location data 603 can include a current location and status of the aircraft 601, including location, speed, flight status, etc.

The flight operations system 630, which can include local air traffic controller systems, remote air traffic controller systems as well as regional, national, or global navigation and tracking systems provides takeoff data 631 and positional data 632 for the airport or flight operator. In various aspects, the takeoff data 631 include scheduled times and aircraft queued for takeoff. The positional data 632 can include (ground-related) ADS-B (Automatic Dependent Surveillance - Broadcast) data for where various aircraft, such as the aircraft 601 are located. The positional data 632 may also include current aircraft positions for the aircraft 601 provided via System Wide Information Management (SWIM). The flight operations system 630 can also include current flight plans 621 for the aircraft 601, which includes flight plans filed with air traffic controller systems, as well as clearances 622, which include clearances for each of the aircraft 601 to use various runways or flight corridors at specified times.

The airline operator system 640 also provides the system 610 with flight plans 641 and constraints data 642. The flight plans 641 specify information about the aircraft 601 controlled by the specific airline and may include a number of passengers, a crew manifest (including duty times and "home" airports), departure and estimated time of arrival (ETA) times for a currently scheduled flight, information related to a next scheduled flight, etc., as well as baseline flight plans for each of the scheduled flights. The constraints data 642 specify various constraints for the aircraft 601 including limits to route variations as well as constraints that may affect aircraft pairing such as scheduling and other limitations.

The system 610 receives the data from the other systems to perform wake matching for aircraft pairs, and to communicate those decisions back to the various systems for further processing and analysis. For example, updated rendezvous speeds and formation airspeeds for the aircraft 601 are provided back to the aircraft 601 as well as other potential flight implementers, such as the airline operator system 640 and the flight operations system 630.

The system 610 includes a wake match predictor 611, which identifies aircraft 601 for aircraft pairs to take advantage of wake surfing, and generates various updated flight plans to determine an improved flight plan to provide increased fuel efficiency for an aircraft 601 in the aircraft pair. The compliance module 612 verifies that the proposed flight plans are compatible with constraints in constraints data 642 provided by the airline operator system 640, as well as compatible with other air traffic controlled by the flight operations system 630.

In some examples, the system 610 provides the improved flight plan to a pilot or auto-pilot system of the aircraft 601. For example, the improved flight may be accepted and implemented by an auto-pilot system aboard the aircraft 601, where the aircraft 601 implementing the changes identified by the system 610 for the improved flight plan. Additionally, the system 610 may also provide the improved flight plan to the airline operator system 640 and the flight operations system 630 which update their respective records of the base flight plan for the aircraft 601 and propagate the updated changes for the improved flight plan to aircraft 601.

Figure 7 is a flowchart of a method 700 for determining an improved flight plan for improved fuel efficiency, among other benefits, according to aspects of the present disclosure. Method 700 begins a block 702, where the system 610 identifies, from a first route for a first aircraft and a second route for a second aircraft, a common flight path portion. For example, as described in relation to Figure 2, the system 610 compares the first route 210 and the second route 220 and identifies the passive overlap 230 as the common flight path portion for the first aircraft 110 and the second aircraft 120.

In some examples, the common flight path portions include both location similarities and time similarities. For example, the first and second aircraft travel in similar areas at similar times. In some examples, the first and second aircraft may travel along the same path for some distance, thus providing a passive overlap of the flight path portions. In other examples, the first and second aircraft may not travel along a same corridor or flight path, but the routes may be close to each other (e.g., proximate paths).

Additionally, in some examples, the system 610 may filter out aircraft with common flight path portions, but are less likely to advantageously form an aircraft pair with increased fuel efficiency. For example, aircraft of different sizes may not successfully form an aircraft pair with an improved flight plan as described herein. In this example, the system 610 may identify alternate aircraft pairs and common flight path portions for the respective aircraft.

At block 704, the system 610 determines if there are no passive overlap portions for the first and second aircraft (e.g., the first aircraft 110 and 120). As described above, the common flight path portions may also include proximate paths. When no passive overlap is identified, method 700 proceeds to block 706.

At block 706, the system 610 identifies one or more additional aircraft with routes proximate to the second route. For example, as described in relation to Figure 4, the system 610 identifies the first aircraft 110 and 450 and their respective routes, the first route 410 and the second route 451 as having similar or proximate routes to the second aircraft 120 and its initial second route 420a. In some examples, the system 610 may identify three or more additional aircraft with common flight path portions at different locations along the initial second route 420a.

At block 708, the system 610 selects the first aircraft from the one or more additional for the common flight path portion, where the common flight path portion includes a proactive overlap of the first route with the second route. For example, in relation to the examples shown in Figure 4, the system 610 selects the aircraft 410 as the first aircraft and includes the proactive overlap 430a as the common flight path portion that will provide increased fuel efficiency for the second aircraft 120. In some examples, the system, among other factors, considers the amount of potential fuel burned by the second aircraft 120 utilizing a different route (e.g., the first proactively altered route 420b) versus the amount of fuel saved by flying in the wake 115 as part of the aircraft pair 100.

In some examples, as the common flight path portion is determined as a passive overlap from block 704 or a proactive overlap in determined in block 706-708, method 700 proceeds to block 710, where the system 610 identifies at least one change to a base flight plan for the second aircraft to provide a rendezvous for the second aircraft to fly within a wake of the first aircraft during the common flight path portion. In some examples, the system 610 also identifies at least one change to a base flight plan for the first aircraft to provide a rendezvous for the second aircraft to fly within a wake of the first aircraft during the common flight path portion. In some examples, the at least one change to the base flight plans may include a change in airspeed as described in relation to Figures 2-3 and in further detail in method 800 of Figure 8.

In some examples, the at least one change to the base flight plans may also include updates/changes to an altitude of the first aircraft and the second aircraft to position the aircraft into formation for the aircraft pair. In some examples, the change in altitude may also be used to determine when the aircraft pair provides overall fuel saving advantages as discussed herein.

The at least one change the base flight plan may also include a proactive change to the route for the first aircraft and/or the second aircraft. For example, the system 610 determines a route change to at least the second route to position the second aircraft for the proactive overlap in the common flight path portion. In some examples, the system 610 determines a route change to at least the first route to position the first aircraft ahead of the second aircraft for the proactive overlap in the common flight path portion.

The at least one change to a base flight plan for the second aircraft may also include an extended common flight path, and an alteration to a departure time for the second aircraft, such as the second aircraft 120 to allow for the second aircraft 120 to enter the aircraft pair at a point 531 as described in relation to Figure 5.

At block 712, the system 610 generates a plurality of updated flight plans with the at least one change to the base flight plan for the second aircraft. For example, the system 610, using the wake match predictor 611 and compliance module 612, generates a plurality of optional updated flight plans. For example, the plurality of updated flight plans may include various combinations of rendezvous and formation airspeeds, altitude changes, various rendezvous and divergence points along common path portions, as well, as various optional route updates for at least the second aircraft. In some examples, the updated flight plans may also include at least one change to the base flight plan of the first aircraft. The updated flight plans can also be crosschecked with flight plans 641 and constraints data 642 in order to ensure than any changes to the flight plans will not violate commercial or civil constraints imposed by the aircraft operators. The updated flights may also be crosschecked with flight operations system 630 to ensure that aircraft control in the airspace is maintained and that updated flight plans do not pose a safety or other risk to the aircraft pair 100 or other aircraft traveling through the airspace.

While shown as distinct examples, the system 610 may also generate optional flight plans from each of the examples shown in Figures 2-5. For example, for the second aircraft 120, the system 610 may generate flight plans including a passive overlap, a proactive overlap, an extended passive overlap and any combination of the above examples in order to determine an improved flight plan.

At block 714, the system 610 selects, from the plurality of updated flight plans and the base flight plan, an improved flight plan for improved fuel efficiency. For each of the updated flight plans, the system 610 determines the overall amount of fuel saved for the aircraft pair and selects the improved flight plan that provides for increased fuel savings. In some examples, additional factors may also be used to select the improved flight plan such as time savings and route simplicity, among other optional factors.

In some examples, the improved flight plan maximizes the fuel savings for the aircraft pair and also reduces a combined environmental impact of the first aircraft and the second aircraft during flight operations. The second aircraft flying within the wake of the first aircraft may also reduce redundant wake and contrail production by the aircraft flying separately, also reducing the combined environment impact of the aircraft pair during flight operations. For example, the first aircraft may use more fuel than its base flight plan in order to implement the aircraft pair (e.g., altering its flight route, changing airspeed or altitude, etc.), but the fuel savings of the second aircraft may provide for increased savings for both aircraft. In this case, the system 610 will select the updated flight plan that provides the maximum fuel savings for the aircraft pair.

In another example, an updated flight plan may improve a fuel efficiency of the second aircraft, but reduce an efficiency of the first aircraft (e.g., due to altered flight routes, airspeed, altitude, etc.) such that the pair overall expends more fuel over their respective routes in order to implement the updated flight plan. In this case, the system 610 will not select the updated flight plan as the improved flight plan since fuel efficiency is not improved overall. Furthermore, in some examples, none of the updated flight plans may provide improved fuel efficiency, such that the system 610 selects the current base flight plan as the flight plan for use; rejecting the updated flight plans. In this example, method 700 proceeds to block 716 where the system 610 implements the base flight plan for the aircraft.

When an improved flight plan different from the base flight plans is selected at block 714, method 700 proceeds to block 718. At block 718, the system 610 replaces the base flight plan for the second aircraft with the improved flight plan. For example, the system 610 may provide the improved flight plan to a flight crew aboard the second aircraft, (e.g., the flight crew aboard the second aircraft 120) and a flight operator for the second aircraft (e.g., an airline route coordinator for the second aircraft 120). The improved flight plan can include updated flight plans including updated speeds and routes, as well as expected fuel savings, and potential time changes for arrival at a destination, among other factors and information. The system 610 also replaces the base flight plan with the improved flight plan in flight plan data 602, flight plans 641, and current flight plans 621 in order to provide consistency for coordination of the flight plans as well as to cause the aircraft 601 to implement the improved flight plan.

In some examples, the system 610 also replaces the base flight plan for the first aircraft with the improved flight. The improved flight plan may also be provided to one of the flight crew aboard the first aircraft, (e.g., a flight crew aboard the first aircraft 110) and a flight operator for the first aircraft. In some examples, the improved flight plan may be accepted or rejected by any of the systems receiving the improved flight plan (e.g., the aircraft 601, the airline operator system 640, and the flight operations system 630). For example, when fuel savings or other factors do not factor into a flight operator's overall goal for flight operations, the various systems may reject the improved flight plan and/or continue along the base flight plan. The improved flight plan may also be accepted and the operation of the second aircraft adjusted to begin executing the improved flight plan.

In another example, both aircraft in the aircraft pair may need to begin execution of the improved flight plan (adjusted for each role as the first or second aircraft in the pair) in order to ensure the aircraft pair forms in the common flight path portion. In some examples, the system 610 provides further coordination between the aircraft pair as the aircraft are provided and being implementation of the improved flight plan in order to ensure that both aircraft have accept the improved flight plan and begin implementation.

At block 720, the system 610 implements the improved flight plan at an improved fuel economy for the second aircraft relative to a base fuel economy for the base flight plan for the second aircraft. For example, the system 610 causes an auto-pilot system aboard the aircraft 601 (as the second aircraft) to begin implementing steps to change airspeed, re-route, or otherwise begin implementing the improved flight plan. In some examples, such as when the improved flight plan includes changes to the base flight plan of the first aircraft, the system 610 also performs the improved flight plan at the first aircraft for the improved fuel economy for the second aircraft relative to the base fuel economy for the base flight plan for the second aircraft.

In some examples, the system 610 implements the improved flight plan via the flight operations system 630 and/or the airline operator system 640, where the flight operations system 630 and the airline operator system 640 relay the improved flight plan(s) to respective aircraft or otherwise cause the first aircraft and the second aircraft to implement the improved flight plan.

Figure 8 is a flowchart of a method 800 for determining an overlap portion for improved fuel efficiency, according to aspects of the present disclosure. As described in relation to block 704 of Figure 7, the system 610 may identify the common flight path portions as including some passive overlap portion (e.g., passive overlap 230 shown in Figure 2). In some examples, as part of generating a plurality of updated flight plans with the at least one change to the base flight plan, the system 610 begins method 800 at block 802 where the system 610 determines when an extended passive overlap portion is possible, such as the extended portions shown in Figure 3. When an extended passive overlap portion is possible, method 800 proceeds to block 804.

At block 804, the system 610 determines one or more extended common flight paths to position the second aircraft within the wake of the first aircraft for an extended flight path portion. For example, the system 610 identifies or otherwise determines the portion 335 as well as updated routes 320b-320d.

Additionally, at block 806, the system 610 selects the improved flight plan as an extended common flight path from the one or more extended flight paths to provide an improved fuel efficiency. When the extended common flight path is selected at block 806 or when the passive overlap portion is not to be extended at block 802, method 800 proceeds to block 808.

At block 808, the system 610 determines one or more updated airspeeds for the second aircraft to position the aircraft within the wake of the first aircraft and selects a rendezvous airspeed and a formation airspeed for the second aircraft at block 810. In some examples, the rendezvous airspeed and the formation airspeed position the second aircraft in the wake of the first aircraft in the common flight path portion as described in relation to Figures 2-5.

Figure 9 illustrates a computing device, according to aspects of the present disclosure. Figure 9 illustrates example computing components of a computing device 900 or other processing system as may be used to provide wake matching as described in the present disclosure by one or more of the system 610, flight operations system 630, airline operator system 640, and/or an onboard computer for an aircraft 601.

The computing device 900 includes a processor 910, a memory 920, and an interface 930. The processor 910 and the memory 920 provide computing functionality to run various programs and/or operations for the computing device 900, including the storage and retrieval of the various data described herein.

The processor 910, which may be any computer processor capable of performing the functions described herein, executes commands based on inputs received from a user and the data received from the interface 930.

The interface 930 connects the computing device 900 to external devices, such as, for example, external memory devices, external computing devices, a power source, a wireless transmitter, etc., and may include various connection ports (e.g., Universal Serial Bus (USB), Firewire, Ethernet, coaxial jacks) and cabling. The interface 930 is used to send and receive between computing devices, such as computing device 900 and to communicate alerts (including go, no-go, and caution alerts) to aircraft 601 and/or the operators thereof.

The memory 920 is a memory storage device that generally includes various processor-executable instructions, that when executed by the processor 910, perform the various functions discussed herein. The processor-executable instructions may generally be described or organized into various "applications" or "modules" in the memory 920, although alternate implementations may have different functions and/or combinations of functions. The memory 920 also generally includes data structures that store information for use by or output by the various applications or modules. In the present disclosure, the memory 920 includes at least instructions for an operating system 921 and one or more application(s) 922. The memory 920 may be one or more memory devices, such as, for example, Random Access Memory (RAM), Read Only Memory (ROM), flash memory, or any other type of volatile or non-volatile storage medium that includes instructions that the processor 910 may execute.

When the computing device 900 provides the functionality of the system 610 (per Figure 6), the memory 920 includes processor executable instructions to provide the functionalities thereof described in the present disclosure. In some aspects, the memory 920 includes databases for locally caching data for analysis by the wake match predictor 611 and the compliance module 612, but can also use data maintained on and received via the interface 930 from a, a flight operations system, an airline operator system, and/or an aircraft including the takeoff data 631, current flight plans 621, positional data 632, clearances 622, flight plans 641, constraints data 642, flight plan data 602, and location data 603, etc.

In the current disclosure, reference is made to various aspects. However, it should be understood that the present disclosure is not limited to specific described aspects. Instead, any combination of the following features and elements, whether related to different aspects or not, is contemplated to implement and practice the teachings provided herein. Additionally, when elements of the aspects are described in the form of "at least one of A and B," it will be understood that aspects including element A exclusively, including element B exclusively, and including element A and B are each contemplated. Furthermore, although some aspects may achieve advantages over other possible solutions and/or over the prior art, whether or not a particular advantage is achieved by a given aspect is not limiting of the present disclosure. Thus, the aspects, features, and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, aspects described herein may be embodied as a system, method or computer program product. Accordingly, aspects may take the form of an entirely hardware aspect, an entirely software aspect (including firmware, resident software, micro-code, etc.) or an aspect combining software and hardware aspects that may all generally be referred to herein as a "circuit," "module" or "system." Furthermore, aspects described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to aspects of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various aspects of the present disclosure. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

As explained above and reiterated below, the present disclosure includes, without limitation, the following example implementations.

Clause 1. A method comprising: identifying (702), from a first route for a first aircraft (110) and a second route for a second aircraft (120), a common flight path portion; identifying (710) at least one change to a base flight plan for the second aircraft (120) to provide a rendezvous for the second aircraft (120) to fly within a wake (115) (115) of the first aircraft (110) over the common flight path portion; generating (712) a plurality of updated flight plans with one or more of the at least one change to the base flight plan for the second aircraft (120); selecting (714), from the plurality of updated flight plans, an improved flight plan for improved fuel efficiency; replacing (718) the base flight plan for the second aircraft (120) with the improved flight plan; and implementing (720) the improved flight plan at an improved fuel economy for the second aircraft (120) relative to a base fuel economy for the base flight plan for the second aircraft (120).

Clause 2. The method of clause 1, wherein: the common flight path portion comprises a passive overlap (230) of the first route (210) with the second route (220) at a first time, identifying (701) the at least one change to the base flight plan for the second aircraft (120) comprises determining (808) one or more updated airspeeds for the second aircraft (120) to position the second aircraft (120) within the wake (115) of the first aircraft (110), and selecting (714) the improved flight plan comprises selecting (810) a rendezvous airspeed and a formation airspeed for the second aircraft (120), wherein the rendezvous airspeed and the formation airspeed position the second aircraft (120) in the wake (115) of the first aircraft (110) in the common flight path portion.

Clause 3. The method of clause 2, wherein: identifying (701) the at least one change to the base flight plan for the second aircraft (120) further comprises determining (804) one or more extended common flight paths (320b) to position the second aircraft (120) within the wake (115) of the first aircraft (110) for an extended flight path portion (335), and
selecting (714) the improved flight plan further comprises selecting (806) an extended common flight path (320b) from the one or more extended common flight paths.

Clause 4. The method of clause 1, wherein: identifying (702) the common flight path portion further comprises: identifying (706) one or more additional aircraft (452) with routes (451) proximate to the second route (420a); and selecting (708) the first aircraft (110) from the one or more additional aircraft for the common flight path portion, wherein the common flight path portion comprises a proactive overlap (430a) of the first route (410) with the second route (420b), and identifying the at least one change to the base flight plan for the second aircraft (120) further comprises determining a route change to at least the second route (420b) to position the second aircraft (120) for the proactive overlap (430a) in the common flight path portion.

Clause 5. The method of clause 1, wherein the at least one change to the base flight plan for the second aircraft (120) comprises an alteration to a departure time for the second aircraft (120).

Clause 6. The method of clause 1, further comprising: identifying (710) at least one change to a base flight plan for the first aircraft (110) to provide the rendezvous for the second aircraft (120) to fly within the wake (115) of the first aircraft (110) over the common flight path portion; replacing (718) the base flight plan for the first aircraft (110) with the improved flight plan; and implementing (720) the improved flight plan at the first aircraft (110) for the improved fuel economy for the second aircraft (120) relative to the base fuel economy for the base flight plan for the second aircraft (120).

Clause 7. The method of clause 1, wherein the improved flight plan causes the second aircraft (120) to fly within the wake (115) of the first aircraft (110) over the common flight path portion reducing a combined amount of emissions from fuel consumption of the first aircraft (110) and the second aircraft (120) during flight operations.

Clause 8. A system (900), comprising: a processor (910); a memory (820) storage device including instructions that when executed by the processor enable performance of an operation, comprising: identifying (702), from a first route for a first aircraft (110) and a second route for a second aircraft (120), a common flight path portion; identifying (710) at least one change to a base flight plan for the second aircraft (120) to provide a rendezvous for the second aircraft (120) to fly within a wake (115) (115) of the first aircraft (110) over the common flight path portion; generating (712) a plurality of updated flight plans with one or more of the at least one change to the base flight plan for the second aircraft (120); selecting (714), from the plurality of updated flight plans, an improved flight plan for improved fuel efficiency; replacing (718) the base flight plan for the second aircraft (120) with the improved flight plan; and implementing (720) the improved flight plan at an improved fuel economy for the second aircraft (120) relative to a base fuel economy for the base flight plan for the second aircraft (120).

Clause 9. The system of clause 8, wherein: the common flight path portion comprises a passive overlap (230) of the first route (210) with the second route (220) at a first time, identifying (701) the at least one change to the base flight plan for the second aircraft (120) comprises determining (808) one or more updated airspeeds for the second aircraft (120) to position the second aircraft (120) within the wake (115) of the first aircraft (110), and selecting (714) the improved flight plan comprises selecting (810) a rendezvous airspeed and a formation airspeed for the second aircraft (120), wherein the rendezvous airspeed and the formation airspeed position the second aircraft (120) in the wake (115) of the first aircraft (110) in the common flight path portion.

Clause 10. The system of clause 9, wherein: identifying (701) the at least one change to the base flight plan for the second aircraft (120) further comprises determining (804) one or more extended common flight paths (320b) to position the second aircraft (120) within the wake (115) of the first aircraft (110) for an extended flight path portion (335), and selecting (714) the improved flight plan further comprises selecting (806) an extended common flight path (320b) from the one or more extended common flight paths.

Clause 11. The system of clause 8, wherein: identifying (702) the common flight path portion further comprises: identifying (706) one or more additional aircraft (452) with routes (451) proximate to the second route (420a); and selecting (708) the first aircraft (110) from the one or more additional aircraft for the common flight path portion, wherein the common flight path portion comprises a proactive overlap (430a) of the first route (410) with the second route (420b), and identifying the at least one change to the base flight plan for the second aircraft (120) further comprises determining a route change to at least the second route (420b) to position the second aircraft (120) for the proactive overlap (430a) in the common flight path portion.

Clause 12. The system of clause 8, wherein the at least one change to the base flight plan for the second aircraft (120) comprises an alteration to a departure time for the second aircraft (120).

Clause 13. The system of clause 8, wherein the operation further comprises: identifying (710) at least one change to a base flight plan for the first aircraft (110) to provide the rendezvous for the second aircraft (120) to fly within the wake (115) of the first aircraft (110) over the common flight path portion; replacing (718) the base flight plan for the first aircraft (110) with the improved flight plan; and implementing (720) the improved flight plan at the first aircraft (110) for the improved fuel economy for the second aircraft (120) relative to the base fuel economy for the base flight plan for the second aircraft (120).

Clause 14. The system of clause 8, wherein the improved flight plan causes the second aircraft (120) to fly within the wake (115) of the first aircraft (110) over the common flight path portion reducing a combined amount of emissions from fuel consumption of the first aircraft (110) and the second aircraft (120) during flight operations.

Clause 15. A computer program product, the computer program product comprising: a computer-readable storage medium having computer-readable program code embodied therewith, the computer-readable program code executable by one or more computer processors to perform an operation, the operation comprising: identifying (702), from a first route for a first aircraft (110) and a second route for a second aircraft (120), a common flight path portion; identifying (710) at least one change to a base flight plan for the second aircraft (120) to provide a rendezvous for the second aircraft (120) to fly within a wake (115) (115) of the first aircraft (110) over the common flight path portion; generating (712) a plurality of updated flight plans with one or more of the at least one change to the base flight plan for the second aircraft (120); selecting (714), from the plurality of updated flight plans, an improved flight plan for improved fuel efficiency; replacing (718) the base flight plan for the second aircraft (120) with the improved flight plan; and implementing (720) the improved flight plan at an improved fuel economy for the second aircraft (120) relative to a base fuel economy for the base flight plan for the second aircraft (120).

While the foregoing is directed to aspects of the present disclosure, other and further aspects of the disclosure may be devised without departing from the basic scope thereof, and the scope thereof is determined by the claims that follow.

## Claims

1. A method comprising:
identifying (702), from a first route for a first aircraft (110) and a second route for a second aircraft (120), a common flight path portion;
identifying (710) at least one change to a base flight plan for the second aircraft (120) to provide a rendezvous for the second aircraft (120) to fly within a wake (115) (115) of the first aircraft (110) over the common flight path portion;
generating (712) a plurality of updated flight plans with one or more of the at least one change to the base flight plan for the second aircraft (120);
selecting (714), from the plurality of updated flight plans, an improved flight plan for improved fuel efficiency;
replacing (718) the base flight plan for the second aircraft (120) with the improved flight plan; and
implementing (720) the improved flight plan at an improved fuel economy for the second aircraft (120) relative to a base fuel economy for the base flight plan for the second aircraft (120).

2. The method of claim 1, wherein:
the common flight path portion comprises a passive overlap (230) of the first route (210) with the second route (220) at a first time,
identifying (701) the at least one change to the base flight plan for the second aircraft (120) comprises determining (808) one or more updated airspeeds for the second aircraft (120) to position the second aircraft (120) within the wake (115) of the first aircraft (110), and
selecting (714) the improved flight plan comprises selecting (810) a rendezvous airspeed and a formation airspeed for the second aircraft (120), wherein the rendezvous airspeed and the formation airspeed position the second aircraft (120) in the wake (115) of the first aircraft (110) in the common flight path portion.

3. The method of claims 1 or 2, wherein:
identifying (701) the at least one change to the base flight plan for the second aircraft (120) further comprises determining (804) one or more extended common flight paths (320b) to position the second aircraft (120) within the wake (115) of the first aircraft (110) for an extended flight path portion (335), and
selecting (714) the improved flight plan further comprises selecting (806) an extended common flight path (320b) from the one or more extended common flight paths.

4. The method of any one of claims 1 to 3, wherein:
identifying (702) the common flight path portion further comprises:
identifying (706) one or more additional aircraft (452) with routes (451) proximate to the second route (420a); and
selecting (708) the first aircraft (110) from the one or more additional aircraft for the common flight path portion, wherein the common flight path portion comprises a proactive overlap (430a) of the first route (410) with the second route (420b), and
identifying the at least one change to the base flight plan for the second aircraft (120) further comprises determining a route change to at least the second route (420b) to position the second aircraft (120) for the proactive overlap (430a) in the common flight path portion.

5. The method of any one of claims 1 to 4, wherein the at least one change to the base flight plan for the second aircraft (120) comprises an alteration to a departure time for the second aircraft (120).

6. The method of any one of claims 1 to 5, further comprising:
identifying (710) at least one change to a base flight plan for the first aircraft (110) to provide the rendezvous for the second aircraft (120) to fly within the wake (115) of the first aircraft (110) over the common flight path portion;
replacing (718) the base flight plan for the first aircraft (110) with the improved flight plan; and
implementing (720) the improved flight plan at the first aircraft (110) for the improved fuel economy for the second aircraft (120) relative to the base fuel economy for the base flight plan for the second aircraft (120).

7. The method of any one of claims 1 to 6, wherein the improved flight plan causes the second aircraft (120) to fly within the wake (115) of the first aircraft (110) over the common flight path portion reducing a combined amount of emissions from fuel consumption of the first aircraft (110) and the second aircraft (120) during flight operations.

8. A system (900), comprising:
a processor (910);
a memory (820) storage device including instructions that when executed by the processor enable performance of an operation, comprising:
identifying (702), from a first route for a first aircraft (110) and a second route for a second aircraft (120), a common flight path portion;
identifying (710) at least one change to a base flight plan for the second aircraft (120) to provide a rendezvous for the second aircraft (120) to fly within a wake (115) (115) of the first aircraft (110) over the common flight path portion;
generating (712) a plurality of updated flight plans with one or more of the at least one change to the base flight plan for the second aircraft (120);
selecting (714), from the plurality of updated flight plans, an improved flight plan for improved fuel efficiency;
replacing (718) the base flight plan for the second aircraft (120) with the improved flight plan; and
implementing (720) the improved flight plan at an improved fuel economy for the second aircraft (120) relative to a base fuel economy for the base flight plan for the second aircraft (120).

9. The system of claim 8, wherein:
the common flight path portion comprises a passive overlap (230) of the first route (210) with the second route (220) at a first time,
identifying (701) the at least one change to the base flight plan for the second aircraft (120) comprises determining (808) one or more updated airspeeds for the second aircraft (120) to position the second aircraft (120) within the wake (115) of the first aircraft (110), and
selecting (714) the improved flight plan comprises selecting (810) a rendezvous airspeed and a formation airspeed for the second aircraft (120), wherein the rendezvous airspeed and the formation airspeed position the second aircraft (120) in the wake (115) of the first aircraft (110) in the common flight path portion.

10. The system of claims 8 or 9, wherein:
identifying (701) the at least one change to the base flight plan for the second aircraft (120) further comprises determining (804) one or more extended common flight paths (320b) to position the second aircraft (120) within the wake (115) of the first aircraft (110) for an extended flight path portion (335), and
selecting (714) the improved flight plan further comprises selecting (806) an extended common flight path (320b) from the one or more extended common flight paths.

11. The system of any one of claims 8 to 10, wherein:
identifying (702) the common flight path portion further comprises:
identifying (706) one or more additional aircraft (452) with routes (451) proximate to the second route (420a); and
selecting (708) the first aircraft (110) from the one or more additional aircraft for the common flight path portion, wherein the common flight path portion comprises a proactive overlap (430a) of the first route (410) with the second route (420b), and
identifying the at least one change to the base flight plan for the second aircraft (120) further comprises determining a route change to at least the second route (420b) to position the second aircraft (120) for the proactive overlap (430a) in the common flight path portion.

12. The system of any one of claims 8 to 11, wherein the at least one change to the base flight plan for the second aircraft (120) comprises an alteration to a departure time for the second aircraft (120).

13. The system of any one of claims 8 to 12, wherein the operation further comprises:
identifying (710) at least one change to a base flight plan for the first aircraft (110) to provide the rendezvous for the second aircraft (120) to fly within the wake (115) of the first aircraft (110) over the common flight path portion;
replacing (718) the base flight plan for the first aircraft (110) with the improved flight plan; and
implementing (720) the improved flight plan at the first aircraft (110) for the improved fuel economy for the second aircraft (120) relative to the base fuel economy for the base flight plan for the second aircraft (120).

14. The system of any one of claims 8 to 13, wherein the improved flight plan causes the second aircraft (120) to fly within the wake (115) of the first aircraft (110) over the common flight path portion reducing a combined amount of emissions from fuel consumption of the first aircraft (110) and the second aircraft (120) during flight operations.

15. A computer program product, the computer program product comprising:
a computer-readable storage medium having computer-readable program code embodied therewith, the computer-readable program code executable by one or more computer processors to perform an operation, the operation comprising:
identifying (702), from a first route for a first aircraft (110) and a second route for a second aircraft (120), a common flight path portion;
identifying (710) at least one change to a base flight plan for the second aircraft (120) to provide a rendezvous for the second aircraft (120) to fly within a wake (115) (115) of the first aircraft (110) over the common flight path portion;
generating (712) a plurality of updated flight plans with one or more of the at least one change to the base flight plan for the second aircraft (120);
selecting (714), from the plurality of updated flight plans, an improved flight plan for improved fuel efficiency;
replacing (718) the base flight plan for the second aircraft (120) with the improved flight plan; and
implementing (720) the improved flight plan at an improved fuel economy for the second aircraft (120) relative to a base fuel economy for the base flight plan for the second aircraft (120).
